# EUROPÄISCHE PATENTANMELDUNG

(11) **EP 2 543 916 A1**
(43) Veröffentlichungstag der Anmeldung: **09.01.2013**
(21) Anmeldenummer: 12167681.1
(22) Anmeldetag: 11.05.2012
(51) Int. Cl.: F16K 37/00, F16K 41/10

(54) **Erkennung von Rissen an Metallbälgen von Ventilen**

(30) Priorität: 08.07.2011 DE 102011078881
(71) Anmelder: Krones AG, 93073 Neutraubling (DE)
(72) Erfinder: Ott, Armin, 93104 Riekofen (DE); Zierer, Martin, 93179 Brennberg (DE)
(74) Vertreter: Grünecker, Kinkeldey, Stockmair & Schwanhäusser

(57) **Zusammenfassung**

Die vorliegende Erfindung betrifft ein Verfahren zum Feststellen einer Beschädigung oder Verschmutzung eines Ventilbalges mit den Schritten: Versetzen des Ventilbalges in Schwingungen, Aufnehmen der Schwingungen mit einem Sensor und Ausgeben eines durch die Schwingungen bewirkten Sensorsignals, und Vergleich wenigstens eines Sensorsignalwerts mit wenigstens einem Referenzwert. Die Erfindung betrifft weiterhin eine Vorrichtung, umfassend: ein Ventil mit einem Ventilbalg, einen Sensor zum Aufnehmen von Schwingungen des Ventilbalges und zum Ausgeben eines durch die Schwingungen bewirkten Sensorsignals, und eine Vergleichsschaltung, insbesondere einen Mikroprozessor, zum Vergleichen wenigstens einen Sensorsignalwerts mit wenigstens einem Referenzwert.

## Beschreibung

### Gebiet der Erfindung

Die vorliegende Erfindung betrifft ein Verfahren zum Feststellen einer Beschädigung oder Verschmutzung eines Ventilbalges sowie eine entsprechende Vorrichtung.

### Stand der Technik

In der Getränke- und Nahrungsmittelindustrie werden im Abfüllprozess Ventile eingesetzt. Innerhalb dieser Ventile befindet sich aus hygienischen Gründen häufig ein Balg, im speziellen ein metallischer Balg, der aus einer oder mehreren Lagen besteht. Mit einem solchen Balg können die Fluide, deren Flussmenge durch diese Ventile geregelt wird, beispielsweise von Schmierstoffen an Gleitstellen sicher getrennt werden. Durch permanente Beanspruchung, Druckschläge oder fehlerhafte Verarbeitung kann es jedoch zu Beschädigungen des Balgs kommen, z. B. können Risse in dem Balg auftreten. Dies führt dazu, dass sich das Produkt oder auch ein Reinigungsmittel in den Spalten oder Rissen absetzen kann. Dies verursacht einen unhygienischen Zustand des Ventils.

Bisher stellt man eine Beschädigung des Balgs dadurch fest, dass man entweder das Ventil auseinander baut und den Balg visuell begutachtet, oder es tritt über einen Leckageraum Flüssigkeit aus, deren Beobachtung ebenfalls ein Indiz der Undichtigkeit ist. Diese Art und Weise der Begutachtung von Ventilbälgen ist jedoch umständlich und zeitaufwändig.

Angesichts dieser Nachteile des Stands der Technik ist es eine Aufgabe der vorliegenden Erfindung, diese Nachteile zu vermeiden und ein Verfahren und eine entsprechende Vorrichtung zur Verfügung zu stellen, eine eventuelle Bestätigung des Ventilbalges ohne eine unmittelbare visuelle Begutachtung des Ventils festzustellen. Vorzugsweise sollte diese Begutachtung automatisierbar sein.

### Beschreibung der Erfindung

Die oben genannte Aufgabe wird gelöst durch ein Verfahren zum Feststellen einer Beschädigung oder Verschmutzung eines Ventilbalges mit den Schritten: Versetzen des Ventilbalges in Schwingungen, Aufnehmen der Schwingungen mit einem Sensor und Ausgeben eines durch die Schwingungen bewirkten Sensorsignals, und Vergleich wenigstens eines Sensorsignalwerts mit wenigstens einem Referenzwert. Jedes Bauteil, somit auch der Ventilbalg, hat ein eigenständiges Schwingungsbild, insbesondere dann, wenn es in definierter Art und Weise in Schwingung versetzt wird. Dieses Schwingungsbild des Balges verändert sich, wenn sich die Beschaffenheit des Balges durch Verschmutzung oder Beschädigung verändert. Durch Aufnehmen dieser Schwingungen mit einem Sensor zur Erzeugung eines Sensorsignals können aus dem Sensorsignal abgeleitet Werte mit einem Referenzwert verglichen werden, um somit Abweichungen von der Norm festzustellen.

Das erfindungsgemäße Verfahren kann weitergebildet werden, indem eine Aufzeichnung des wenigstens einen Referenzwerts bei in Betriebnahme des Ventils durchgeführt wird. Dies hat den Vorteil, dass der Referenzwert im eingebauten Zustand des Ventils erfolgt und dadurch eventuelle Umgebungseinflüsse wie etwa Resonanzen oder Dämpfungen mit berücksichtigt werden.

Eine andere Weiterbildung besteht darin, dass der wenigstens eine Referenzwert eine Referenzkurve mit einer Mehrzahl von Referenzwerten umfasst. Eine solche Referenzkurve kann beispielsweise durch die Schwingungsamplitude und/oder Schwingungsfrequenz im zeitlichen Verlauf gegeben sein, wobei dann mehrere zur verschiedenen Zeiten gegebene Sensorsignalwerte mit den entsprechenden Referenzwerten im zeitlichen Verlauf der Referenzkurve verglichen werden können.

Gemäß einer anderen Weiterbildung des Verfahrens zum Feststellen einer Beschädigung oder Verschmutzung eines Ventilbalges kann der weitere Schritt des Feststellens einer Beschädigung oder Verschmutzung wenn der wenigstens eine Sensorsignalwert um einen vorbestimmten Betrag von dem wenigstens einen Referenzwert abweicht, durchgeführt werden. Durch die Vorgabe eines vorbestimmten Betrages der Abweichung (z. B. auch in Form eines Absolutbetrages der Abweichung) wird eine einfache Vorschrift zum Feststellen einer Beschädigung oder Verschmutzung des Ventilbalges definiert.

In einer anderen Weiterbildung kann der Schritt des Versetzens des Ventilbalges in Schwingungen durch ein Öffnen und Schließen des Ventils erfolgen. Dabei wird z. B. der Ventilteller kurz angehoben um ihn dann wieder an seinen Anschlag zu fahren. Insbesondere beim Anschlagen wird der Ventilbalg in Schwingungen versetzt, die mit dem Sensor aufgenommen werden können. Im Zusammenhang mit einem zeitlichen Verlauf des Sensorsignals und daraus abgeleiteter Sensorsignalwerte wird durch den Zeitpunkt des Anschlagens auch ein Startzeitpunkt definiert.

Das Verfahren gemäß dieser Weiterbildung kann wiederum weitergebildet werden, indem ein Aufzeichnen des wenigstens einen Referenzwerts bei Inbetriebnahme des Ventils ebenfalls durch ein Öffnen und Schließen des Ventils erfolgt. Auf diese Weise wird ein Referenzwert bzw. eine Referenzwertkurve aufgezeichnet, der unter den gleichen Bedingungen wie die spätere Messung durchgeführt wird.

Das Verfahren kann vorzugsweise nach einer erfolgten Ventilreinigung durchgeführt werden, weil der Ventilbalg dann frei von Ablagerungen sein sollte.

Das erfindungsgemäße Verfahren oder eine der Weiterbildungen kann so durchgeführt werden, dass zum Vergleich des wenigstens einen Sensorsignalwerts mit wenigstens einem Referenzwert eine Frequenzanalyse des Sensorsignals erfolgt. Auf diese Weise kann z. B. die Messung bei einer besonders charakteristischen Frequenz (Eigenfrequenz) des Ventilbalges durchgeführt werden. Zudem sind auch Vergleiche von Signalwerten mit Referenzwerten bei verschiedenen Frequenzen möglich.

Die oben genannten Aufgabe wird weiterhin gelöst durch eine Vorrichtung, umfassend: ein Ventil mit einem Ventilbalg, einen Sensor zum Aufnehmen von Schwingungen des Ventilbalges und zum Ausgeben eines durch die Schwingungen bewirkten Sensorsignals, und eine Vergleichsschaltung, insbesondere einen Mikroprozessor, zum Vergleichen wenigstens einen Sensorsignalwerts mit wenigstens einem Referenzwert. Die erfindungsgemäße Vorrichtung dient zur Durchführung des erfindungsgemäßen Verfahrens. Die Vorteile der erfindungsgemäßen Vorrichtung gegenüber dem Stand der Technik entsprechen jenen, die bereits im Zusammenhang mit dem erfindungsgemäßen Verfahren genannt wurden, weshalb an dieser Stelle auf eine Wiederholung versichtet wird.

Die erfindungsgemäße Vorrichtung kann weitergebildet werden, indem ein Datenspeicher zum Speichern von Referenzwerten, insbesondere einer Referenzkurve, und/oder von Grenzwerten vorgesehen sein kann.

Eine andere Weiterbildung besteht darin, dass ein oder mehrere Verbindungsleitungen vom Sensor zur Vergleichsschaltung vorgesehen sind, wobei die Verbindungsleitungen vorzugsweise über einen Steuerkopf des Ventils geführt werden. Somit können die Sensorsignale zur Auswertung an die Vergleichsschaltung übermittelt werden, wenn der Sensor z.B. innerhalb des Ventilbalges angeordnet ist.

Gemäß einer anderen Weiterbildung kann die Vergleichsschaltung weiterhin dazu ausgebildet sein, eine Frequenzanalyse des Sensorsignals durchzuführen.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

### Zeichnungen

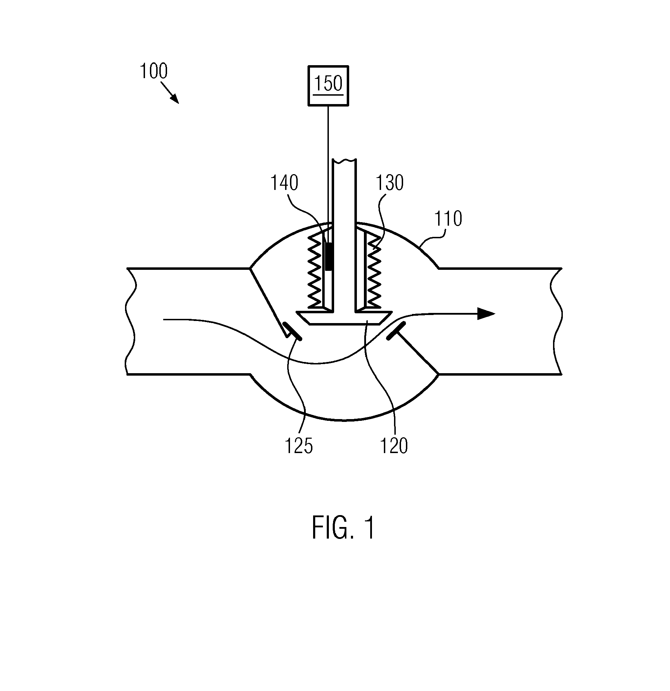

- Figur 1: stellt eine Ausführungsform der erfindungsgemäßen Vorrichtung dar.

### Ausführungsformen

Figur 1 zeigt eine Ausführungsform der erfindungsgemäßen Vorrichtung.

Die erfindungsgemäße Vorrichtung 100 umfasst ein Ventil 110 mit einem Ventilbalg 130, einen Sensor 140, welcher Schwingungen des Balges 130 erfasst und ein durch die Schwingungen bewirktes Sensorsignal an eine Vergleichsschaltung 150 ausgibt, wobei hier die Vergleichsschaltung aus einem Mikroprozessor 150 besteht, der einen Sensorsignalwert mit einem Referenzwert vergleicht. In diesem Beispiel ist der Sensor 140 an einer Innenseite des Balges 130 angebracht. Der Ventilbalg 130 besteht aus Metall. Wenn das Ventil in Betrieb genommen wird, wird eine Referenzkurve des funktionsfähigen Balgs 130 aufgezeichnet und als Referenz abgespeichert. Dazu kann beispielsweise der Ventilteller 120 kurz angeliftet werden, um ihn dann wieder an seinen Anschlag 125 zu fahren. Die Schwingungen des Balges 130 werden von dem Sensor 140, beispielsweise in Form eines piezoelektrischen Sensors erfasst und in Signale umgewandelt.

Eine Messung zur Feststellung eventueller Beschädigungen und/oder Verunreinigungen des Balgs, die sich nicht entfernen lassen, kann dann z. B. nach einem Reinigungszyklus erfolgen, in dem das Ventil und insbesondere der Balg gereinigt werden. Dazu wird der Balg in gleicher Weise wie bei Aufzeichnung des Referenzwerts / der Referenzwerte in Schwingungen versetzt, indem der Ventilteller angehoben wird und wieder auf den Anschlag 125 gebracht wird. Falls sich aufgrund eines Vergleichs der gemessenen Werte eine zu große, etwa durch Grenzwerte definierte Abweichung vom Normalzustand, d. h. von der abgespeicherten Referenzkurve ergibt, liegt also eine Veränderung in Form einer Beschädigung oder einer Verschmutzung vor.

Auf diese Weise können sich anbahnende Beschädigungen entdeckt und das Ergebnis z. B. in einem Wartungsplan berücksichtig werden. Im Falle von mehrlagigen Bälgen tritt unter Umständen noch keine Flüssigkeit aus, wenn etwa nur eine Lage des Balges beschädigt ist. Dennoch kann diese Beschädigung zu unhygienischen Ablagerungen führen, die mit diesem System erkannt werden.

Der Sensor 140 ist in dieser Ausführungsform innerhalb des Balges angeordnet, er kann jedoch auch außerhalb des Ventilgehäuses angeordnet sein, wobei der Ventilkörper als Verstärker dient. Eine andere Möglichkeit besteht darin, den Sensor innerhalb des Ventils jedoch außerhalb des Balges anzuordnen.

Zusammenfassend stellt also die vorliegende Erfindung ein Verfahren und eine Vorrichtung zur Verfügung, mit der insbesondere Risse an Metallbälgen von Ventilen erkannt werden können. Erfindungsgemäß wird der Metallbalg in Schwingungen versetzt und das Schwingungsbild wird von einem Sensor erfasst und mit einem aufgezeichneten Schwingungsbild verglichen. Auf diese Weise kann festgestellt werden, ob der Balg anders schwingt als bei der Inbetriebnahme und infolgedessen als beschädigt oder verschmutzt einzustufen ist.

## Patentansprüche

1. Verfahren zum Feststellen einer Beschädigung oder Verschmutzung eines Ventilbalges mit den Schritten:
Versetzen des Ventilbalges in Schwingungen;
Aufnehmen der Schwingungen mit einem Sensor und Ausgeben eines durch die Schwingungen bewirkten Sensorsignals; und
Vergleich wenigstens eines Sensorsignalwerts mit wenigstens einem Referenzwert.

2. Verfahren nach Anspruch 1, mit dem weiteren Schritt:
Aufzeichnen des wenigstens einen Referenzwerts bei Inbetriebnahme des Ventils.

3. Verfahren nach Anspruch 1 oder 2, wobei der wenigstens eine Referenzwert eine Referenzkurve mit einer Mehrzahl von Referenzwerten umfasst.

4. Verfahren nach einem der Ansprüche 1 bis 3, mit dem weiteren Schritt:
Feststellen einer Beschädigung oder Verschmutzung wenn der wenigstens eine Sensorsignalwert um einen vorbestimmten Betrag von dem wenigstens einen Referenzwert abweicht.

5. Verfahren nach einem der Ansprüche 1 bis 4, wobei der Schritt des Versetzens des Ventilbalges in Schwingungen durch ein Öffnen und Schließen des Ventils erfolgt.

6. Verfahren nach Anspruch 5 in Verbindung mit Anspruch 2, wobei Aufzeichnen des wenigstens einen Referenzwerts bei Inbetriebnahme des Ventils ebenfalls durch ein Öffnen und Schließen des Ventils erfolgt.

7. Verfahren nach einem der Ansprüche 1 bis 6, wobei das Verfahren nach einer erfolgten Ventilreinigung durchgeführt wird.

8. Verfahren nach einem der Ansprüche 1 bis 7, wobei zum Vergleich des wenigstens einen Sensorsignalwerts mit wenigstens einem Referenzwert eine Frequenzanalyse des Sensorsignals durchgeführt wird.

9. Vorrichtung, umfassend:
ein Ventil mit einem Ventilbalg;
einen Sensor zum Aufnehmen von Schwingungen des Ventilbalges und Ausgeben eines durch die Schwingungen bewirkten Sensorsignals; und
eine Vergleichsschaltung, insbesondere einen Mikroprozessor, zum Vergleichen wenigstens eines Sensorsignalwerts mit wenigstens einem Referenzwert.

10. Vorrichtung nach Anspruch 9, weiterhin umfassend:
einen Datenspeicher zum Speichern von Referenzwerten, insbesondere einer Referenzkurve, und/oder von Grenzwerten.

11. Vorrichtung nach Anspruch 9 oder 10, weiterhin umfassend:
ein oder mehrere Verbindungsleitungen vom Sensor zur Vergleichsschaltung,
wobei die Verbindungsleitungen vorzugsweise über einen Steuerkopf des Ventils geführt werden.

12. Vorrichtung nach einem der Ansprüche 9 bis 11, wobei die Vergleichsschaltung weiterhin dazu ausgebildet ist, eine Frequenzanalyse des Sensorsignals durchzuführen.
